# EUROPÄISCHE PATENTSCHRIFT

(11) **EP 1 445 161 B1**
(45) Veröffentlichungstag und Bekanntmachung des Hinweises auf die Patenterteilung: **11.01.2012**
(21) Anmeldenummer: 04001354.2
(22) Anmeldetag: 22.01.2004
(51) Int. Cl.: B60T 8/36, B60T 8/40, B60T 8/44, B60T 13/14, B60T 13/52

(54) **Fahrzeugbremsanlage und Betriebsverfahren dafür**
Braking system for a vehicle and method of operation thereof
Système de freinage pour un véhicule et procédé d'opération dudit système

(30) Priorität: 07.02.2003 DE 10305223
(43) Veröffentlichungstag der Anmeldung: 11.08.2004
(73) Patentinhaber: Continental Teves AG & Co. oHG, 60488 Frankfurt (DE)
(72) Erfinder: Magel, Guntjof, 65428 Rüsselsheim (DE); Sikorski, Frank, 61169 Friedberg (DE)
(74) Vertreter: Neumann, Stephan

(56) Entgegenhaltungen:
- US-A- 3 829 166
- US-A1- 2004 075 339
- US-B1- 6 206 482
- US-B1- 6 517 170

## Beschreibung

Die Erfindung betrifft ein Verfahren zum Betreiben einer Fahrzeugbremsanlage nach dem Oberbegriff des Patentanspruchs 1.

Zwar sind zur Druckmittelförderung weitgehend pulsationsfreie Verdrängerpumpen wie insbesondere Zahnradpumpen bekannt, aber deren Anpassung an vergleichsweise dünnflüssige Druckmittel wie Bremsflüssigkeit und die dadurch verursachte innere Leckage ist problembehaftet. Derzeit finden größtenteils exzentergetriebene Kolbenpumpen Verwendung, wobei jedem Kreis der Fahrzeugbremsanlage eine eigenständige Kolben-Zylindereinheit zugeordnet ist, welche in Bezug auf die andere Kolben-Zylindereinheit gegenläufig arbeitet. Mit anderen Worten befindet sich die eine Kolben-Zylindereinheit in einem Ansaugtakt, während sich die andere Kolben-Zylindereinheit in einem Verdrängungstakt befindet.

Insbesondere, wenn eine Pumpe zur Druckerhöhung in den Radbremsen herangezogen werden soll (OHB), macht sich jedoch die prinzipbedingte Besonderheit einer Kolbenpumpe bemerkbar, dass während eines Rückhub (Saughub) keine Druckerhöhung möglich ist. Dieser Nachteil macht sich besonders nachteilig bemerkbar, wenn der Druckaufbau in einer der Radbremsen des betreffenden Pumpenkreises sehr schnell erfolgen soll, um beispielsweise einen pulsartigen Fahrstabilitätseingriff (ESP) zu ermöglichen.

Während einer OHB-V (Vakuumbremskraftverstärkereinsatz mit gleichzeitiger hydraulischer Pumpen-Unterstützung) /ABS-Überlagerung kommt es bei bekannten Bremssystemen zu Funktionseinschränkungen, wenn ein Druckaufbau in einem der beiden Bremskreise durch einen getakteten Betrieb gewünscht wird und sich zu diesem Zeitpunkt (Aufbaupuls) der Exzenter und damit auch der Pumpenkolben des betreffenden Bremskreises im Saughub befindet. In diesem Fall ist ein Druckaufbau im gewünschten Kreis nicht möglich.

Die US-A-3 829 166 offenbart ein Motor-Pumpenaggregat umfassend einen Aufnahmekörper mit einer Pumpe und einen elektrischen Motor zum Antrieb der Pumpe. Weiterhin ist ein elektronischer Regler zur Betätigung von Ventilen vorgesehen. Zur Ermittlung der Raddrehzahl ist ein Sensor einer Getriebewelle zugeordnet. Die so ermittelte Raddrehzahl wird dem elektronischen Regler zugeführt, um die Ventile anzusteuern.

Die US 6,206,482 B1 beschreibt ein elektronisches Bremsenmanagement umfassend einen bürstenlosen Motor und eine hydraulische Pumpe. Der bürstenlose Motor ist dreiphasig ausgebildet. Zur Motoransteuerung sind Treiber und Encoder unter Verwendung von Hallsensoren vorgesehen, die bezogen auf den bürstenlosen Motor eine Motordrehzahlerfassung und Positionserfassung ermöglichen. Die Ansteuerung von dem Motor erfolgt durch Puls-Weiten-Modulation unter Verwendung der gewonnenen Motordrehzahl- und Motorpositionsdaten. Die Motordaten werden demnach einem Motorregler zur Regelung der Motordrehzahl zugeführt.

Es ist die Aufgabe der vorliegenden Erfindung, ein Verfahren zum Betreiben einer geregelten Fahrzeugbremsanlage vorzuschlagen, welches gegenüber dem zitierten Stand der Technik verbessert ist.

Diese Aufgabe wird durch ein Verfahren zum Betreiben einer Fahrzeugbremsanlage gemäß den kennzeichnenden Merkmalen des Patentanspruchs 1 gelöst.

Dadurch wird das dynamische Verhalten des Fahrzeugbremssystems insbesondere bei Fahrdynamikregelungseingriffen verbessert

Die Erfindung ermöglicht eine verbesserte Synchronisierung der elektronischen Regelung mit den vorgesehenen Peripheriegeräten. Die gewonnene Information kann beispielsweise dazu verwendet werden, um während eines Ansaugtakts eine andere Druckquelle, als die grundsätzlich konstruktiv vorgesehene, vorzusehen. Bei Verwendung einer Pumpe mit zwei exzentergetriebenen, gegenüberliegenden Pumpenkolben kann dadurch beispielsweise ermöglicht werden, eine im Verdrängungstakt befindliche Kolben-ZylinderEinheit, welche konstruktiv einem anderen Kreis zugeordnet ist, für die nachgefragte Druckerhöhung heranzuziehen.

Die Information über den Pumpenbetriebszustand kann auf grundsätzlich verschiedene Arten gewonnen werden. Es ist ganz grundsätzlich denkbar, die relative Verschiebung von Pumpenkolben in Bezug auf den Aufnahmekörper zu erfassen. Es wird jedoch vorgeschlagen, dass eine Rotordrehlage des Motors erfasst wird, so dass dem Regler Rotordrehlageninformationen des Motors zugeführt werden. Weil die Pumpenkolben zwangsgetrieben zumeist über einen Exzenter angetrieben werden, welcher fest mit einer Rotor- oder Motorwelle verbunden ist, erlaubt die Rotordrehlageninformation einen unmittelbaren Rückschluß auf den momentanen Pumpenbetriebszustand.

Bei einer Vorrichtung zur Durchführung des Verfahrens verfügt ein Rotor über elektrische Wicklungen wobei eine mit einem oberen Totpunkt oder mit einem unteren Totpunkt fluchtende Wicklung eine Codierung aufweist, welche auf die Rotordrehlage und / oder die Rotordrehzahl schließen lässt.

In weiterer Ausgestaltung der Vorrichtung weist die codierte elektrische Wicklung einen im Vergleich zu weiteren elektrischen Wicklungen veränderten elektrischen Widerstand auf. Dies ist beispielsweise mittels abgeändertem Wickeldrahtdurchmesser oder abgeänderter Wickeldrahtlänge (Wicklungsanzahl) oder Kombinationen davon machbar. Wenn die Rotorwicklungen außenstromlos geschaltet sind, also wenn keine äußere Stromzuführung über die zugehörigen Bürsten erfolgt, wird dadurch ermöglicht, die infolge Rotorrotation in die Wicklung induzierten Ströme auszulesen. Weil ein anderer Wicklungswiderstand einen anderen Induktionsstrom nach sich zieht, wird durch Beobachtung der induzierten Wicklungsströme eine eindeutige Drehlageninformation über den Pumpenexzenter erteilt. Wenn dies zeitlich fortgesetzt wird, ist auch eine Drehzahlinformation erzielbar.

Um einen gleichmäßigen, unwuchtarmen Motorlauf zu ermöglichen, kann es vorgesehen sein, die Motorwicklungen stromflussrichtungsabhängig zu modifizieren, so dass alle Wicklungen bei Außenbestromung übereinstimmende Widerstände aufweisen, und dass die Widerstandsänderung nur bei außenstromlosem Zustand wirksam ist.

Weitere Einzelheiten sowie Vorteile der Erfindung gehen aus nachstehender Beschreibung hervor.

Eine hydraulische Bremsanlage für ein Kraftfahrzeug umfasst einen pneumatischen Bremskraftverstärker und einen damit verbundenen Hauptbremszylinder, welcher über Bremsleitungen mit einem Motor-Pumpenaggregat verbunden ist, das einen Aufnahmekörper für eine Pumpe sowie elektromagnetisch betätigbare Ventile und diese miteinander verbindende Kanäle aufweist. An dem Aufnahmekörper ist ein elektronischer Regler zur Ansteuerung bzw. Stromversorgung eines pumpenantreibenden Elektromotors sowie der Elektromagnetventile vorgesehen. Von dem Aufnahmekörper führen vorzugsweise Rohre zu Radbremsen.

Im Betrieb der Bremsanlage werden dem elektronischen Regler Informationen über den Pumpenbetriebszustand zugeführt, welche in die Regelung der Fahrzeugbremsanlage einbezogen werden. Die Informationen werden in jedem Fall mit einbezogen, wenn während Aktivität von OHB-V (Vakuumbremskraftverstärkereinsatz mit gleichzeitiger hydraulischer Pumpen-Unterstützung) und gleichzeitigem ABS-Regelvorgang ein Druckaufbau in einem Bremskreis mittels getaktetem Betrieb gewünscht wird, wobei sich zu diesem Zeitpunkt (Aufbaupuls) der Exzenter und damit auch der betreffende Pumpenkolben in einem Saughub befindet.

Im Einzelnen wird eine Rotordrehlage erfasst und als Rotordrehlageninformation dem Regler zugeführt.

Im Prinzip beruht die Erfindung darauf dass der Motor wenigstens einen Rotor mit wenigstens einer codierten Wicklung aufweist. Gemäß einer Ausführungsform beruht eine technische Umsetzung dieser Lösung darauf, dass eine Modifikation im Wicklungswiderstand eines Rotors im Vergleich mit nicht modifizierten Wicklungen auch eine Änderung des durch die modifizierte Wicklung fließenden Stroms verursacht. Zu diesem Zweck ist die Codierung bei einer einfachen Ausführungsform fluchtend mit einem oberen oder einem unteren Totpunkt (Kulminationspunkt während einem Saughub oder einem Verdrängungshub) der Pumpe vorgesehen. Die modifizierte Wicklung kann einen stromrichtungsabhängig veränderlichen elektrischen Widerstand aufweisen, was mittels Dioden und / oder Widerständen machbar ist.

Die Codierung kann auf besonders einfache Weise bewirkt werden, indem eine Diode in einem bypassartigen Diodenzweig parallel zu einem Teilabschnitt der jeweiligen Wicklung vorgesehen ist. Bei Außenbestromung sperrt die Diode den Diodenzweig und erzwingt eine Bestromung der gesamten Wicklungslänge. Beim Auslesen induzierter Ströme ermöglicht die Diode eine verkürzte Wicklungslänge und dadurch einen verringerten Wicklungswiderstand.

Widerstandsänderungen lassen sich ebenso über modifizierte Wickeldrahtlängen (Windungsanzahl) oder über modifizierte Wickeldrahtdurchmesser erzielen. Kombinationen der genannten Widerstandsmodifikationen sind ohne weiteres möglich.

Die Erfindung ist mit den folgenden Vorteilen verknüpft: Durch die Bestimmung der Position des Excenters ist im getakteten Betrieb der Pumpe ein synchronisierter Druckaufbau möglich. Ein weiterer Vorteil der Drehzahlermittlung ergibt sich aus der linearen Abhängigkeit der sich einstellenden Pumpendrehzahl vom THZ (Tandemhauptzylinder)-Druck während des Förderns. Damit ist über eine Drehzahlmessung eine genaue Bestimmung des THZ-Druckes möglich. Als resultierender Vorteil ist eine homogenere und geräuschärmere ABS-Regelung möglich. Die Pumpendrehzahl, die sich ohne fördern - also im Leerlauf der Pumpe einstellt ist abhängig von der Viskosität der Hydraulimediums, und damit von der Temperatur. Damit wäre eine Temperaturbestimmung durch einen kurzen Pumpenlauf und zwar unabhängig von der eigentlichen Regelung möglich. Darüber hinaus ermöglicht die Erfindung eine genaue Ermittlung der Pumpendrehzahl und Positionsbestimmung eines Pumpenexzenters ohne Verwendung zusätzlicher Sensorik.

## Patentansprüche

1. Verfahren zum Betreiben einer Fahrzeugbremsanlage mit einem Motor-Pumpen-Aggregat zur Druckmittelförderung oder zur Druckerhöhung umfassend einen Hauptbremszylinder einen Aufnahmekörper für die Pumpe und elektromagnetisch mittels einem elektronischen Regler betätigbare Ventile, sowie diese Bauteile miteinander verbindende Kanäle, und an den Aufnahmekörper mittels Schlauch- und/oder Rohrleitungen angeschlossene Radbremsen, wobei dem elektronischen Regler Informationen über den Pumpenbetriebszustand zugeführt werden, und wobei diese Informationen in die Regelung der Fahrzeugbremsanlage einbezogen werden, **dadurch gekennzeichnet, daß** eine modifizierte Ventilansteuerung vorgenommen wird, und daß ein Druckaufbaupuls zumindest geringfügig zeitverzögert eingesteuert wird, wenn sich die betreffende Pumpe in einem Ansaugtakt befindet.

2. Verfahren nach Anspruch 1, **dadurch gekennzeichnet, dass** eine Rotordrehlage des Motors erfasst wird, so dass dem Regler Rotordrehlageninformationen des Motors zugeführt werden.

3. Verfahren nach Anspruch 1 oder 2, **dadurch gekennzeichnet, dass** die Informationen über den Pumpenbetriebszustand einbezogen werden, wenn während Aktivität von OHB-V und gleichzeitigem ABS-Regelvorgang ein Druckaufbau in einem Bremskreis mittels getaktetem Betrieb erforderlich ist, und sich zu diesem Zeitpunkt der Exzenter und damit auch der betreffende Pumpenkolben in einem Saughub befindet.

4. Fahrzeugbremsanlage zur Durchführung des Verfahrens nach Anspruch 1, **dadurch gekennzeichnet, dass** der Motor einen Rotor mit wenigstens einer codierten Wicklung aufweist.

5. Fahrzeugbremsanlage nach Anspruch 4, **dadurch gekennzeichnet, dass** die codierte Wicklung fluchtend mit einem oberen Totpunkt oder mit einem unteren Totpunkt eines Exzenters zum Antrieb der Pumpe vorgesehen ist.

6. Fahrzeugbremsanlage nach Anspruch 4 oder 5, **dadurch gekennzeichnet, dass** die codierte elektrische Wicklung einen im Vergleich zu weiteren elektrischen Wicklungen modifizierten elektrischen Widerstand aufweist.

7. Fahrzeugbremsanlage nach einem der Ansprüche 4-6,
**dadurch gekennzeichnet, dass** die codierte elektrische Wicklung einen stromrichtungsabhängig modifizierten elektrischen Widerstand aufweist.

8. Fahrzeugbremsanlage nach Anspruch 6 oder 7, **dadurch gekennzeichnet, dass** zur Modifikation des elektrischen Widerstands der elektrischen Wicklung wenigstens eine Diode oder ein Widerstand vorgesehen ist.

9. Fahrzeugbremsanlage nach Anspruch 8, **dadurch gekennzeichnet, dass** die Diode in einem Diodenzweig angeordnet ist, welcher zumindest einem Teilabschnitt der codierten Wicklung parallel geschaltet ist.

10. Fahrzeugbremsanlage nach Anspruch 6, **dadurch gekennzeichnet, dass** die codierte Wicklung zur Ermöglichung eines modifizierten Wicklungswiderstandes eine modifizierte Wicklungsanzahl oder einen modifizierten Wickeldrahtdurchmesser oder eine Kombination davon aufweist.

## Claims

1. Method for operating a vehicle brake system having a motor-pump assembly for conveying pressure medium or for increasing the pressure, comprising a master brake cylinder, a receptacle body for the pump and valves which can be actuated electromagnetically by means of an electronic controller, as well as ducts which connect these components to one another, and wheel brakes which are connected to the receptacle body by means of hose lines and/or pipelines, wherein information about the pump operating state is fed to the electronic controller, and wherein this information is input into the control of the vehicle brake system, **characterized in that** a modified valve actuation process is carried out, and **in that** a pressure build-up pulse is applied at least with a slight delay if the respective pump is in an intake stroke.

2. Method according to Claim 1, **characterized in that** a rotor rotational position of the motor is sensed, with the result that rotor rotational position information of the motor is fed to the controller.

3. Method according to Claim 1 or 2, **characterized in that** the information about the pump operating state is included if a pressure build-up in a brake circuit by means of a clocked operating mode is necessary while OHB-V and at the same time ABS control processes are active, and at this time the eccentric and therefore also the respective pump piston are in a suction stroke.

4. Vehicle brake system for carrying out the method according to Claim 1, **characterized in that** the motor has a rotor with at least one encoded winding.

5. Vehicle brake system according to Claim 4, **characterized in that** the encoded winding is provided aligned with a top dead centre or with a bottom dead centre of an eccentric for driving the pump.

6. Vehicle brake system according to Claim 4 or 5, **characterized in that** the encoded electrical winding has an electrical resistance which is modified compared to further electrical windings.

7. Vehicle brake system according to one of Claims 4-6, **characterized in that** the encoded electrical winding has an electrical resistance which is modified as a function of the direction of current.

8. Vehicle brake system according to Claim 6 or 7, **characterized in that** at least one diode or one resistor is provided for modifying the electrical resistance of the electrical winding.

9. Vehicle brake system according to Claim 8, **characterized in that** the diode is arranged in a diode branch which is connected in parallel with at least one partial section of the encoded winding.

10. Vehicle brake system according to Claim 6, **characterized in that** the encoded winding for permitting modified winding resistance has a modified number of windings or a modified winding wire diameter or a combination thereof.

## Revendications

1. Procédé de conduite d'une installation de freinage de véhicule présentant un ensemble moteur-pompe destiné à refouler un fluide sous pression ou à augmenter la pression, l'ensemble comprenant
un cylindre principal de frein,
un corps de reprise de la pompe,
des soupapes aptes à être actionnées électromagnétiquement au moyen d'un régulateur électronique,
des canaux qui relient ces composants les uns aux autres et
des freins de roues raccordés au corps de reprise par des conduits flexibles et/ou des conduits tubulaires,
des informations concernant l'état de fonctionnement de la pompe étant apportées au régulateur électronique et ces informations étant utilisées dans la régulation de l'installation de freinage du véhicule,
**caractérisé en ce que**
la commande des soupapes est modifiée et
**en ce qu'**une impulsion d'établissement de pression est commandée avec au moins un léger retard temporel si la pompe concernée se trouve dans une phase d'aspiration.

2. Procédé selon la revendication 1, **caractérisé en ce que** la position en rotation du rotor du moteur est détectée de manière à apporter au régulateur des informations concernant la position en rotation du rotor du moteur.

3. Procédé selon les revendications 1 ou 2, **caractérisé en ce que** les informations concernant l'état de fonctionnement de la pompe sont prises en compte si une pression doit être établie dans un circuit de freinage au moyen d'un fonctionnement cadencé pendant une activité OHB-V et une opération simultanée de régulation ABS et si à cet instant l'excentrique et donc également le piston concerné de la pompe sont en course d'aspiration.

4. Installation de freinage pour véhicule en vue d'exécuter le procédé selon la revendication 1, **caractérisée en ce que** le moteur présente un rotor doté d'au moins un enroulement codé.

5. Installation de freinage pour véhicule selon la revendication 4, **caractérisée en ce que** l'enroulement codé est prévu en alignement sur un point mort haut ou sur un point mort bas d'un excentrique destiné à entraîner les pompe.

6. Installation de freinage pour véhicule selon les revendications 4 ou 5, **caractérisée en ce que** la résistance électrique de l'enroulement électrique codé est différente de celle des autres enroulements électriques.

7. Installation de freinage pour véhicule selon l'une des revendications 4 à 6, **caractérisée en ce que** la résistance électrique de l'enroulement électrique codé est modifiée en fonction de la direction d'écoulement du courant.

8. Installation de freinage pour véhicule selon les revendications 6 ou 7, **caractérisée en ce qu'**au moins une diode ou ne résistance sont prévues pour modifier la résistance électrique de l'enroulement électrique.

9. Installation de freinage pour véhicule selon la revendication 8, **caractérisée en ce que** la diode est disposée dans une branche pour diode dont au moins une partie est raccordée en parallèle à l'enroulement codé.

10. Installation de freinage pour véhicule selon la revendication 6, **caractérisée en ce que** pour permettre de modifier la résistance de l'enroulement, l'enroulement codé présente un autre nombre modifié de spires, un diamètre différent du fil de l'enroulement ou une combinaison de ces dispositions.
